# EUROPÄISCHE PATENTSCHRIFT

(11) **EP 3 229 973 B1**
(45) Veröffentlichungstag und Bekanntmachung des Hinweises auf die Patenterteilung: **13.02.2019**
(21) Anmeldenummer: 15826137.0
(22) Anmeldetag: 11.12.2015
(51) Int. Cl.: B05C 5/02, B05C 9/06, B05C 11/10, H01M 4/04

(54) **VERFAHREN UND VORRICHTUNG ZUM INTERMITTIERENDEN BESCHICHTEN**
METHOD AND DEVICE FOR INTERMITTENT COATING
PROCÉDÉ ET DISPOSITIF D'APPLICATION PAR INTERMITTENCE DE REVÊTEMENT

(30) Priorität: 12.12.2014 DE 102014118524
(43) Veröffentlichungstag der Anmeldung: 18.10.2017
(73) Patentinhaber: Karlsruher Institut für Technologie, 76131 Karlsruhe (DE)
(72) Erfinder: SCHARFER, Philip, 76344 Eggenstein-Leopoldshafen (DE); SCHMITT, Marcel, 76135 Karlsruhe (DE); SCHABEL, Wilhelm, 76229 Karlsruhe (DE); DIEHM, Ralf, 97877 Wertheim (DE)
(86) Internationale Anmeldenummer: PCT/EP2015/002504
(87) Internationale Veröffentlichungsnummer: WO 2016/091392

(56) Entgegenhaltungen:
- WO-A1-2012/008234
- DE-A1-102010 025 119
- US-A1- 2002 017 238

## Beschreibung

Die Erfindung betrifft ein Verfahren und eine Vorrichtung zum intermittierenden Beschichten eines bewegten Substrats.

Aus der japanischen Patentoffenlegungsschrift JP 2001 191 005 A ist eine Vorrichtung zum intermittierenden Auftragen von Klebstoff auf einen kontinuierlich laufenden Körper bekannt. Hier wird ein Verfahren offengelegt, welches eine Heißschmelze einer Düse zuführt und auf ein kontinuierlich laufendes Substrat aufträgt. Es wird beschrieben dass die Zufuhr von Heißschmelze zu der Düse unterbrochen wird, wenn keine Beschichtung hergestellt werden soll. Indem dieser Vorgang wiederholt wird, wird ein Substrat intermittierend beschichtet.

Alternativ wird ein intermittierendes Beschichten dadurch erreicht, dass der Beschichtungsspalt zwischen der Düse und dem Substrat mit jeder Beschichtungsunterbrechung vergrößert wird. Der dennoch vorhandene Nachlauf des Beschichtungsstoffs benetzt allerdings die Düsenlippen, was bei einer erneuten Annäherung an das Substrat (Ableiterfolie) zu einer Überhöhung der Startkante führt. Nachteilig an diesem Ansatz ist auch, dass durch die Bewegung der Düse und das Aufsetzten der benetzten Düsenlippen auf das Substrat, Vibrationen in dem Substrat verursacht werden, welche wiederum den Abstand der Düsenlippen zum Substrat beeinflussen. Demensprechend ist es nicht möglich, eine kontinuierliche Nassfilmdicke zu realisieren.

Sekundäre Lithium-Ionen Batterien basieren auf einer Anordnung von mehreren elektrochemischen Zellen.
Die Elektroden in einer elektrochemischen Zelle weisen jeweils ein Aktivmaterial auf, aus dem während des Betriebs der elektrochemischen Zelle Lithium-Ionen in die Elektroden interkaliert werden. In der negativen Elektrode (Kathode) werden als Aktivmaterial lithiumhaltiges Verbundoxid, bevorzugt LiCoO₂, LiFePO₄, LiNi_{1/3}Co_{1/3}Mn_{1/3}O₂ (NCM) oder LiNi_{0,8}Co_{0, 15}Al_{0,05}O₂ (NCA), mesoporöses Titanoxid und in der positiven Elektrode (Anode) Leitruß, Ruß., Graphit o. ä. eingesetzt.

Aus der DE 10 2004 012 476 A1 sind geeignete Beschichtungsstoffe und deren Herstellung bekannt. Bei einem hier vorgeschlagenen Beschichtungsverfahren wird der für die Kathoden- bzw. Anodenbeschichtungsmasse (Beschichtungsstoff) erforderliche Polymerbinder gelöst, z. B. in einer 5-10 %-tigen Fluorelastomer-Homo- oder Copolymerisate in N-Methylpyrrolidon (NMP) und die dabei entstehende Polymerlösung mit den kathoden- bzw. anodenspezifischen Zusätzen wie Lithium interkalierbare Metalloxide bzw. Lithium interkalierbare Kohlenstoffe (Leitruß, Ruß, Graphit o. ä.) versetzt und dispergiert. Dann wird diese Dispersion mit einer Filmbeschichtungstechnik auf das Substrat, hier die Stromkollektoren bzw. ein Sammelkörper wie Folien, Bändern, Netzen o. ä., aufgetragen.

Alternativ kann auch Polyvinyliden-Fluorid als Binder auf der Kathodenseite und Styrol-Butadien-Kautschuk auf der Anodenseite zur Verbesserung der mechanischen Festigkeit eingesetzt werden und mit Leitruß (Leitfähigkeitsruß) zur Erhöhung der elektrischen Leitfähigkeit versehen werden. Die Aktivmaterialien werden dementsprechend in Form von Pasten bzw. einem pastösen Beschichtungsstoff unter Einsatz von Lösungsmitteln sowie Carboxymethylcellulose als Verdicker auf das Substrat bzw. das metallische Ableitermaterial aufgebracht.

Aufgrund der geringen elektrischen Leitfähigkeit der porösen, partikulären Schichtmorphologien, weist die aufgetragene Elektrodenschicht (Nassfilm) mangelhafte Entladungsrateneigenschaften auf. Um die Elektrizitätssammelfähigkeit zu erhöhen, muss daher die aufgetragene Elektrodenschicht, welche auf dem elektrisch leitenden Substrat (Sammelkörper, Elektrode) aufgetragen wird, so dünn wie möglich ausgeführt sein. Vorzugsweise wird hier ein Nassfilmdicke der aufgetragenen Menisken zwischen 10 µm, entsprechend einer hohen Leistung, und 850 µm entsprechend einer, hohen Kapazität angestrebt. M. Schmitt et al., "Slot-die processing of lithium-ion battery electrodes-Coating window characterization" (Chemical Engineering and Processing: Process Intensification, Volume 68, June 2013, Pages 32-37) sowie M. Schmitt et al. "Slot die coating of lithium-ion battery electrodes: investigations on edge effect issues for stripe and pattern coatings" (Journal of Coatings Technology and Research January 2014, Volume 11, Issue 1, pp 57-63) lehren ein geeignetes Verfahren zum Beschichten von Folienelektroden mit einer Schlitzdüse sowie die optimalen Betriebsbedingungen zur Durchführung dieses Verfahrens betreffend der geometrischen Abmaße einer geeigneten Vorrichtung.

Um exakte (Film-)Start- und (Film-)Stoppkanten der Schichten bzw. der Beschichtungsabschnitte zu erhalten, ist bereits aus der DE 10 246 327 A1 bekannt, den Beschichtungsstoff nach dem Absperren (Verschließen) des Zulaufkanals, zurückzuziehen. Dieser Effekt ist als der sogenannte "Snuff-Back" bekannt. Der Beschichtungsstoff wird nach dem Sperrmittel und vor dem Austritt, einen Unterdruck entgegengesetzt der ursprünglichen Flussrichtung gestoppt und zurück bewegt.

Eine Alternative hierzu offenbart die US 2002/0017238 A1 in dieser ist eine Vorrichtung offenbart, welche eine intermittierende Beschichtung auf ein bewegtes Substrat aufträgt, wobei die Beschichtungsunterbrechung nicht durch das Verschließen durch ein Sperrmittel in Verbindung mit einem Snuff-Back vor dem Austritt hervorgerufen wird, sondern durch eine Kombination aus Änderung des Innenvolumens der Schlitzdüse in Verbindung mit einem Snuff-Back-Effekt. Dies wird durch das aktive Hin- und Herbewegen des elastisch verformbaren Elements durch eine Verstelleinheit in einem Düsenbacken hervorgerufen. Die aktive Volumenvergrößerung durch die Verstelleinheit bewirkt eine Sogwirkung im Düsenspalt, wodurch der Snuff-Back auf den Beschichtungsstoff in dem Austrittsspalt wirkt. Dementsprechend wird die Flussrichtung und die in dem Beschichtungsstoff anliegende Scherspannung τ in ihrer Richtung umgekehrt. Der Beschichtungsstoff wird hier vor dem Auftragen auf dem Substrat, zeitweise in der mit Unterdruck beaufschlagten Kavität oder in dem variablen Volumen gespeichert. Der gespeicherte Beschichtungsstoff wird dann während eines darauf folgenden Beschichtungszyklus aufgetragen.

Es hat sich aber gezeigt, dass hierdurch unerwünschte Druckschwankungen und Druckspitzen in dem System auftreten, welche insbesondere beim Starten eines Beschichtungsvorgangs zu Störungen führen. Auch durch das Verkleinern des variablen Innenvolumens, wobei der in der Kavität gespeicherte Beschichtungsstoff dem Fördervolumenstrom q wieder zugeführt wird, bildet sich eine undefinierte Anlaufströmung in dem Düsenschlitz aus. Ursache hierfür ist, dass die Scherspannung τ des Fördervolumenstroms q eine andere Richtung als die des durch den Snuff-Back zurückgehaltenen Teilvolumenstroms hat. Somit muss zunächst eine Richtungsänderung der Scherspannung τ des zurückgehaltenen Teilvolumenstroms erzwungen werden, um eine genügend hohe stationäre Scherung bzw. Scherspannung τ in Richtung des Düsenaustritts zu erhalten.
Dementsprechend ist die Anlaufströmung zu gering ausgeprägt, und es bilden sich unerwünschten Quer- bzw. Längsstreifen auf den erzeugten Beschichtungen.

Des Weiteren sind die Fließ- und Verarbeitungseigenschaften des Beschichtungsstoffs zur Herstellung von Elektrodenschichten für Li-Ionen-Zellen entscheidend für Auslegung der Vorrichtung und des Verfahrens. Hier werdenSchergeschwindigkeiten γ̇ (Scherraten) des Beschichtungsstoffs von bis zu 100 000 s⁻¹ erreicht. Die Schergeschwindigkeit γ̇ wird berechnet aus dem Verhältnis zwischen dem Geschwindigkeitsunterschied zweier benachbarter Flüssigkeitsschichten und deren Abstand. Schergeschwindigkeit ist somit der Gradient des Geschwindigkeitsfeldes. Dies ist gerade für die hier zum Einsatz kommenden Beschichtungsstoffe entscheidend, da diese Beschichtungsstoffe sich strukturviskos bzw. scherverdünnend verhalten.

Dies bedeutet, dass ein Volumenstrom erst bei der Einwirkung einer Schubspannung τ oberhalb einer minimalen Schubspannung τ_{f} (Fließgrenze) zu fließen beginnt.

Ein weiterer Nachteil, der aus dem Stand der Technik bekannten Vorrichtungen ist, dass diese nur intermittierend sequentielle Beschichtungen auftragen. Ein zeitgleiches Auftragen mehrerer Schichten aufeinander oder nacheinander ist nicht vorgesehen.

Ausgehend hiervon liegt die Aufgabe der Erfindung darin, eine Vorrichtung und ein Verfahren vorzuschlagen, welche eine intermittierende Beschichtung eines bewegten Substrats bei einer konstanten Nassfilmdicke unter Einhaltung exakter Filmkanten gewährleistet und somit die Nachteile und Einschränkungen, welche aus dem Stand der Technik bekannt sind, vermeidet.

Gelöst wird die Aufgabe im Hinblick auf die Erzeugung von exakten Filmstartkanten und Filmstoppkanten durch eine Vorrichtung zum intermittierenden Beschichten eines in Bewegung befindlichen Substrats mit den Merkmalen nach Anspruch 1. Weiterbildungen bzw. bevorzugte Ausführungsformen der Vorrichtung sind in den Unteransprüchen ausgeführt.

Zur Lösung der Aufgabe wird eine Vorrichtung vorgeschlagen, welche einen Düsenkörper mit mindestens zwei Düsenbacken umfasst. Zwischen den gegenüber liegenden Düsenbacken ist eine Einlagefolie mit mindestens einer Aussparung vorgesehen.

Die Aussparung in der Einlagefolie bildet mindestens einen Düsenschlitz innerhalb des Düsenkörpers aus.

Der Düsenschlitz endet quer zur Transportrichtung U des Substrats relativ zum Düsenkörper und parallel zum Substrat als Austrittsspalt des Düsenkörpers, wobei der Austrittsspalt über den Düsenschlitz in Strömungsverbindung mit dem Zulaufkanal ist.

Der Beschichtungsstoff oder die Beschichtungsstoffe A,B wird bzw. werden mittels einer oder zwei Pumpen ausgehend vom zugehörigen Zuführkanal über den jeweiligen Düsenschlitz zum korrespondierenden Austrittsspalt gefördert.

Wenigstens eine Düsenbacke ist mit mindestens einem Durchbruch versehen, wobei der Durchbruch zwischen dem Zulaufkanal und dem Austrittsspalt in den Düsenschlitz ausmündet und mit einem elastischen verformbaren Element fluiddichtend (gasdichtend) zum Düsenschlitz hin verschlossen ist.

Der Durchbruch ist ferner mit einer dem elastisch verformbaren Element gegenüberliegenden Abdeckung versehen, welche mit dem elastisch verformbaren Element in dem Düsenbacken eine Druckkammer für die Aufnahme eines Hilfsfluides (Öl oder Wasser oder Luft oder Helium) ausbildet und die Druckkammer fluiddichtend (gasdicht) gegenüber der Umgebung verschließt. Zur Erfassung der Verformung des elastisch verformbaren Elements ist in der Druckkammer ein Sensor vorzugsweise ein Abstandssensor angebracht oder durch die Abdeckung in die Druckkammer integriert, wobei der Abstandssensor vorzugsweise aber nicht zwingend orthogonal und mittig auf das elastisch verformbare Element gerichtet ist.

Die Druckkammer ist durch eine oder mehrere Zuleitungen mit mindestens zwei oder mehreren Druckquellen für das Hilfsfluid fluidisch verbunden. Zwischen der Zuleitung und jeder Druckquelle ist mindestens ein Ventil zwischengeschaltet. Über das mindestens eine Ventil wird jeweils nur eine der Druckquellen mit der Zuleitung fluidisch verbunden. Jede Druckquelle erzeugt jeweils einen diskreten konstanten Druck wobei die Drücke der Druckquellen sich jeweils in ihrem Betrag unterscheiden. Der diskrete Druck aller Druckquellen ist jeweils höher als der Systemdruck p im Zulaufkanal. Die Zuleitung kann aber auch zeitweise an den Umgebungsdruck mit einem Ventil geschaltet werden.

In den Unteransprüchen sind technische Maßnahmen beschrieben, die einen Hochgeschwindigkeitsbetrieb U > 100m/min vorteilhaft unterstützen.

Der Beschichtungsstoff wird mittels einer Pumpe ausgehend vom Zuführkanal zum Düsenschlitz mit konstantem Fördervolumenstrom q zum Austrittsspalt gefördert.

Vor dem Zulaufkanal wird hierzu ein Scherregulator zur Manipulation der Schubspannung τ im Beschichtungsstoff vorgeschaltet.

Der Scherregulator weist eine vom Beschichtungsstoff durchströmbare Kavität auf, in der ein umströmbarer Verdrängungskörper eingesetzt ist und als Restkavität einen Ringspalt um den Verdrängungskörper ausbildet.

Der Verdrängungskörper und ist mittels eines Aktors axial in der Kavität verschiebbar. Somit bildet der Ringspalt eine in Flussrichtung variable sich zuspitzenden kegelstumpfförmige Erstreckung aus. Der Aktor, vorzugsweise als ein Linearaktor ausgeführt, positioniert den Verdrängerkörper auf axial verschiedenen Positionen. Somit wird bei einem großen Querschnitt des Ringspalts eine geringe Scherung innerhalb der Beschichtungsstoffs erreicht und respektive einem geringen Querschnitts des Ringspalts eine hohe Scherung.

Während jeder Unterbrechungsphase wird der Fluidstrom im vor Düsenaustritt gestoppt. Hierdurch sinkt der durch den Fluidstrom initiierte Druckverlust in dem Düsenschlitz bzw. dem Zulaufkanal um eben diesen Anteil.

Bei einem gegendruckabhängigen Förderpumpe wie einer Schneckenpumpe ändert sich in der Konsequenz der geförderte Volumenstrom.

Um dieser den Beschichtungsvorgang negativ beeinflussenden Effekt auszugleichen, wird während der Unterbrechungsphase der Ringspalt durch den Verdrängerkörper verengt. Die somit örtlich vergrößerte Scherung des Beschichtungsstoffs gleicht den wegfallenden Druckverlust vor dem Düsenaustritt aus.

In den Unteransprüchen sind technische Maßnahmen beschrieben, die eine sowohl eine einfach als auch eine doppellagige Beschichtung ermöglich.

Zwischen den Düsenbacken ist hierzu eine Trennplatte angeordneten. Die Trennplatte ist vorzugsweise keilförmig ausgebildet. Zwischen jeder Düsenbacke und der Trennplatte ist jeweils eine Einlagefolie mit einer Aussparung vorgesehen.

Die jeweilige Einlagefolie bildet jeweils einen Düsenschlitz innerhalb des Düsenkörpers aus.

Durch das Entlasten (erste Schaltstellung) des elastisch verformbaren Elemehts, welches dem Austrittsspalt am nächsten liegt, herbeigeführt durch die Reduzierung des Drucks in der Druckkammer oder auch Gegenkraft und durch zeitgleiches Ändern der Schubspannung durch den Scherregulator vor dem Zuführkanal, wird das Auftragen des Beschichtungsstoffs auf das Substrat unterbrochen.

Das Be- und Entlasten der oder des elastischen Elements wird hierbei als jeweils Schaltzustand bezeichnet,'wobei in jedem Schaltzustand sich die Richtung der durch den Druck in der Druckkammer ausgeübten Kraft auf das elastisch verformbare Element nicht ändert, sondern nur der Betrag der ausgeübten Kraft.

Durch das Belasten des elastisch verformbaren Elements, welches dem Austrittsspalt am nächsten liegt, herbeigeführt durch die Anhebung des Druckes in der Druckkammer und das zeitgleiche Ändern der Schubspannung durch den Scherregulator vor dem Zuführkanal, wird das Auftragen des Beschichtungsstoffs auf das Substrat wieder hergestellt.

Die Erfindung wird im Folgenden anhand von Ausführungsbeispielen und den Figuren näher erläutert.

Hierbei zeigen:
- **Fig. 1a:**: Schematische Darstellungen einer erfindungsgemäßen Vorrichtung zum intermittierenden Beschichten mit variablem Innenvolumen während der Beschichtungsphase.
- **Fig. 1b:**: Schematische Darstellung der geometrischen Verhältnisse am Austrittspalt
- **Fig. 1c:**: Schematische Darstellungen einer erfindungsgemäßen Vorrichtung zum intermittierenden Beschichten mit variablem Innenvolumen während der Unterbrechungsphase.
- **Fig. 1d:**: Schematische Darstellungen einer erfindungsgemäßen Vorrichtung zum intermittierenden Beschichten mit variablem Innenvolumen und einem Scherregulator während der Unterbrechungsphase.
- **Fig. 2a:**: Schematische Darstellungen einer erfindungsgemäßen Vorrichtung zum intermittierenden Beschichten mit variablem Innenvolumen mit Doppelspalt
- **Fig. 2b:**: Schematische Darstellung der geometrischen Verhältnisse am Austrittspalt einer erfindungsgemäßen Vorrichtung mit Doppelspalt

Es folgt die Erläuterung der Erfindung anhand der Zeichnungen nach Aufbau und ggf. auch nach Wirkungsweise der dargestellten Erfindung.

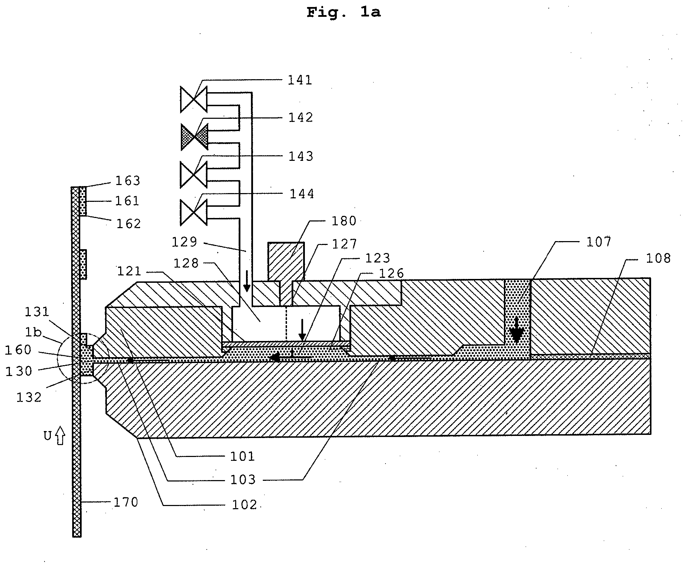

In **Fig. 1a** ist ein Schnitt durch eine, erfindungsgemäße Vorrichtung zum intermittierenden Beschichten 100 mit variablem Innenvolumen dargestellt. Zwischen zwei Düsenbacken 101, 102 wird ein Düsenschlitz 103 mittels einer Einlagefolie 108 mit einer Aussparung (nicht dargestellt) eingestellt. Die Einlagefolie 108 erstreckt sich über die gesamte Länge und Breite der Düsenbacken 101,102 und ist vorzugsweise in Metall mit einer Dicke zwischen 0,01 mm und 3,00 mm, vorzugsweise zwischen 0,05 mm und 1,0 mm, besonders bevorzugt zwischen 0,3 mm und 0,5 mm ausgeführt. Die Aussparung (nicht dargestellt) bildet im Zusammenbau zwischen den Düsenbacken 101,102 einen Schlitz aus, welche sich von dem Zulaufkanal 107 bis zum Austrittsspalt 130 erstreckt. Der Austrittsspalt 130 der Vorrichtung ist hierbei quer zur Transportrichtung U des Substrats 170 und parallel zum Substrat 170 positioniert.

Vor dem Düsenaustritt 130 ist in der Düsenbacke 101 ein Durchbruch 123 vorgesehen, wobei der Durchbruch zwischen dem Zulaufkanal 107 und dem Austrittsspalt 130 in den Düsenschlitz 103 ausmündet und mit einem elastisch verformbaren Element 121 fluiddichtend (gasdichtend) zum Düsenschlitz 103 hin verschlossen ist.

Die Anordnung umfasst ein elastisch verformbares Element 121, wobei elastisch verformbar gleichgestellt mit flexibel hier im Sinne von nachgiebig bzw. biegsam definiert wird. Zugehörig ist ferner ein Dichtelement 122, eine Abdeckung 126 mit einer Druckkammer 128 und Durchbruch 127, sowie eine Zuleitung für ein Hilfsmedium 129 mit den Ventilen (Sperrmitteln) 141, 142, 143 und 144. Die Sperrmittel 141, 142, 143 und 144 sind vorzugsweise als Ventil insbesondere als Durchgangsventil ausgebildet.

Das elastisch verformbare Element 121 ist an den Randbereichen im Durchbruch 123 von einem optionalem Dichtelement 122 und der Abdeckung 126 in ihrer Position auf einer sogenannten Nase (Vorsprung) im Düsenbacken 101 fixiert und abgedichtet.

Durch das elastisch verformbare Element 121 kann der Düsenschlitz 103, in seiner Höhe und somit das Gesamtvolumen des Düsenschlitzes 103 sowie der Druckkammer 128 variiert werden.

Zur Erfassung bzw. Überwachung der Verformung des elastisch verformbaren Elements 121 und somit des variablen Volumens im Düsenschlitz 103, ist eine geeignete Sensorik 180 in einem Durchbruch 127 der Abdeckung 126 integriert. Der hier eingesetzte Abstandssensor ist orthogonal und mittig auf das elastisch verformbare Element 121 gerichtet.

Die vom Schlitz 103 mittels des elastisch verformbaren Elements 121 abgetrennte Druckkammer 128 wird durch ein Hilfsmedium (Öl oder Wasser oder Helium oder Luft) befüllt. Hierdurch wird der Innendruck der Druckkammer 128 gesteuert bzw. geregelt. Die Regelung/Steuerung des Innendrucks der Druckkammer 128 erfolgt je nach eingesetzten Ventilen (Sperrmitteln) 141, 142, 143 und 144 entweder stufenlos oder in diskreten Druckstufen.

Hierdurch wird das Volumen der Druckkammer 128 und somit auch das Volumen des vom Beschichtungsstoff durchströmten Düsenschlitzes 103 verändert.

Die ungleichen Druckstufen liegen dabei an den Sperrmedien 141 - 144 welche je nach Verfahrensabschnitt zur Zuleitung 129 hin geöffnet oder geschlossen werden.

Durch die Veränderung des Innenvolumens des durchströmten Düsenschlitzes 103 wird der Volumenstrom des kontinuierlich zugeführten Beschichtungsstoffs zeitweise aufgenommen, zwischen gespeichert und anschließend wieder gleichmäßig abgegeben.

Während der Beschichtung eines Substrats mit einem Flüssigkeitsfilm 161 wird der Düsenschlitz 103 im Bereich der Druckkammer 128 durch einen Druck grösser des Systemdrucks ps im Düsenschlitz 103 in der Druckkammer 128 beständig verkleinert.

Der Druck verläuft im Beschichtungszustand innerhalb des Düsenkörpers 100 bzw. dem Düsenschlitzes 103 beginnend vom Zulaufkanal 107 bis zum Austrittsspalt 130 stetig fallend. Die Scherspannung τ liegt über den gesamten Düsenschlitz 103 oberhalb der Fließgrenze τ_{f}.

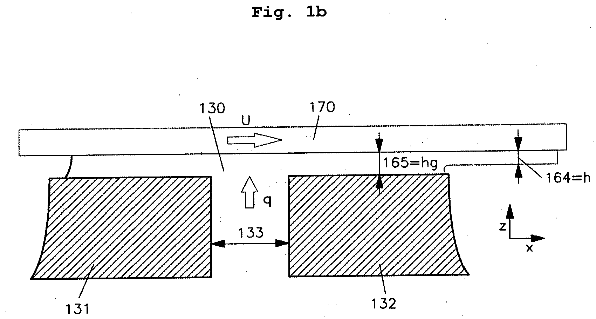

In **Fig. 1b** ist eine schematische Darstellung der geometrischen Verhältnisse am Austrittspalt 130 wiedergegeben. Der Düsenschlitz 103 endet quer zur Transportrichtung U des Substrats 170 und parallel zum Substrat 170 als Austrittsspalt 130 des Düsenkörpers 100 vgl. Fig. 1a, wobei der Austrittsspalt 130 über den Düsenschlitz 103 in Strömungsverbindung mit dem Zulaufkanal 107 vgl. Fig. 1a ist.

Die Breite des Austrittspalts 133 entspricht hier der Dicke der Einlagefolie 108 und definiert den Abstand zwischen der Stromaufwärts gelegenen Düsenlippe 131 und der Stromabwärts gelegenen Düsenlippe 132.

Zwischen dem Austrittsspalt 130 bzw. den beiden Düsenlippen 131,132 und dem in Bewegung befindlichen Substrat 170 bildet sich während des Beschichtungsprozesses eine Flüssigkeitsbrücke 160 aus vgl. Fig. 1a. Die sich im Beschichtungsprozess einstellende Dicke der Flüssigkeitsbrücke 165 (=hg) ist höher als die gewünschte Nassfilmdicke 164 (=h).

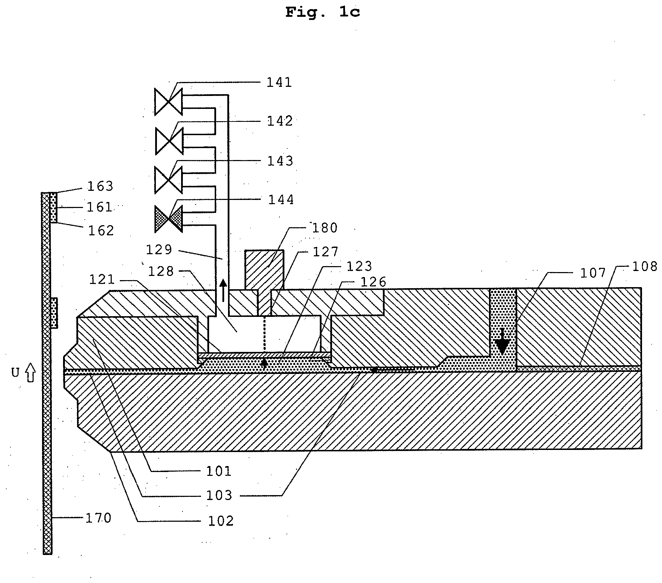

In **Fig. 1c** ist die erfindungsgemäße Vorrichtung schematisch während des Beginns der Unterbrechungsphase dargestellt. Hier wird durch das Anpassen des Innendrucks in der Druckkammer 128 auf etwa den Umgebungsdruck, jedoch nicht unter den Umgebungsdruck das elastisch verformbaren Elements 121, nur durch die Wirkung des Systemdrucks ps (Druck im Düsenspalt 103) derart verformt, dass dies eine Vergrößerung des Volumens in diesem Abschnitt des Düsenschlitzes 103 zur Folge hat. Dementsprechend nimmt das Volumen der Druckkammer ab.

Die zeitliche Änderung der Vergrößerung des Volumens in diesem Abschnitt des Düsenschlitzes 103 wird so eingestellt, dass der weiterhin anströmende Beschichtungsstoff vollständig in das variable Volumen des Düsenschlitzes 103 aufgenommen wird.

Der Druck nach diesem Abschnitt des Düsenschlitzes 103 in Richtung des Austrittsspalts 130 (vgl. Fig. 1b) fällt zeitgleich hierdurch auf Umgebungsdruck ab.

Infolgedessen, fällt der Betrag der Scherspannung τ des Beschichtungsstoffs in diesem Abschnitt des Düsenspalts 103, in Richtung des Austrittsspalts 130 (vgl. Fig. 1b), unterhalb der Fließgrenze τ_{f}. Jedoch bleibt in diesem Abschnitt des Düsenspalts 103 die Scherspannung τ in ihrer Richtung zum Austrittsspalts 130 (vgl. Fig. 1b) unverändert und ist grösser > 0.

Hierdurch kommt es zum Erliegen des Volumenstroms q in diesem Abschnitt des Düsenspalts 103 und letztendlich zum Abreißen der Flüssigkeitsbrücke 160 (vgl. Fig. 1a) am Austrittsspalt 130.

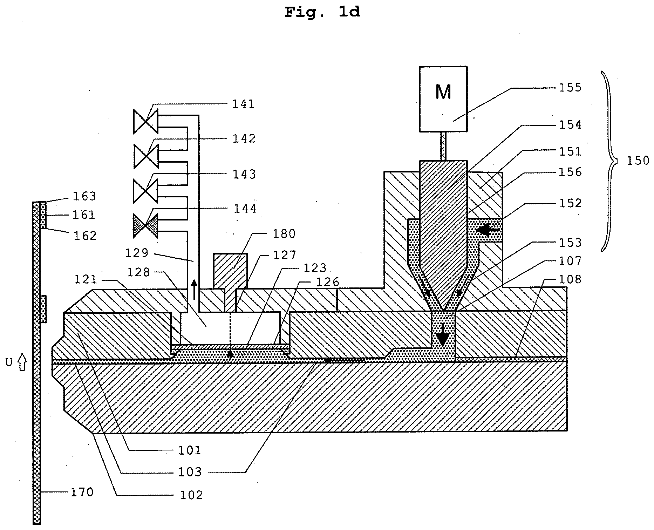

In **Fig. 1d** ist die erfindungsgemäße Vorrichtung schematisch während des Beginns der Unterbrechungsphase dargestellt. Hier wird durch das Anpassen des Innendruckdrucks in der Druckkammer 128 auf etwa Umgebungsdruck, das elastisch verformbare Element 121, nur durch die Wirkung des Systemdrucks ps derart verformt, dass dies eine Vergrößerung des Volumens in diesem Abschnitt des Düsenschlitzes 103 zur Folge hat.

Dementsprechend verringert sich das Innenvolumen der Druckkammer 128.

In Unterschied zur **Fig. 1c** umfasst die Vorrichtung einen Scherregulator 150 zur Anpassung der Scherspannung τ des Beschichtungsstoffs. Der Scherregulator 150 ist fest aber lösbar an einem Düsenbacken, hier dem Düsenbacken 101 angebracht.

Der Scherregulator 150 umfasst wiederum ein Gehäuse 151 mit einer durch das Gehäuse 151 durchbrechenden Kavität mit einer in Flussrichtung ersten oberen Öffnung und einer in Flussrichtung zweiten unteren Öffnung, wobei der Durchmesser der zweiten untere Öffnung kleiner als die erste obere Öffnung ausgeführt ist.

Die Kavität im Gehäuse 151 ist geometrisch in zwei Bereiche aufgeteilt, wobei der in Flussrichtung anfängliche und oben liegende Bereich zylinderförmig ausgebildet ist und im zweiten Bereich in Richtung des Zulaufkanals 107 die Kavität kegelstumpfförmig und durchgängig geöffnet am Zulaufkanal 107 endet.

Ferner ist die Kavität über mindestens einen senkrecht zur Kavität verlaufenden Fluidzulaufkanal (Fluidzulauf) 152 im Gehäuse 151 und einer mit dem Fluidzulauf 152 verbunden Zuleitung (nicht dargestellt) mit einer Förderpumpe (nicht dargestellt) einerseits und in Flussrichtung mit dem Zulaufkanal 107 im Düsenbacken 101 andererseits in Verbindung.

Der Fluidzulauf 152 im Gehäuse 151 ist vorzugsweise als eine Durchgangsbohrung senkrecht zum Zulaufkanal 107 und parallel zum Düsenschlitz 103 in dem obenliegenden zylinderförmigen Bereich der Kavität im Gehäuse 151 vorgesehen. Vorteilhafterweise sind mehrere Fluidzuläufe 152 vorgesehen um den Scherregulator 150 mit einem an den Bedarf angepassten Volumenstrom des Beschichtungsstoffs zu beschicken.

Durch die obere Öffnung des Gehäuses 151 wird ein Verdrängerkörper 154 in die Kavität eingebracht.

Der Verdrängerkörper 154 füllt die Kavität jedoch nur insoweit aus, dass sich in der verbleibenden Restkavität ein Ringspalt 153 über die gesamte Länge der Restkavität ausbildet. Der Ringspalt 153 ist vorzugsweise gleichförmig und gleichverteilt ausgebildet.

Der Verdrängerkörper 154 ist in seiner Lage in der Kavität, insbesondere in der Tiefe des Eindringens in die Kavität, mittels einer Verstelleinheit (Aktor) 155, axial verschiebbar. Somit ist das Volumen der Restkavität, im Speziellen die Breite des Ringspalts 153 variierbar.

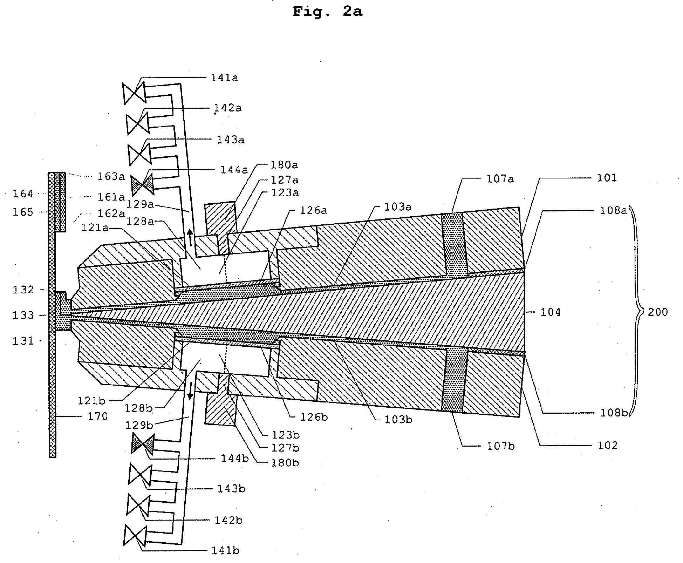

Gemäß **Fig. 2a** sind die Düsenbacken 101,102 der Vorrichtung 200 um eine vorzugsweise keilförmige Trennplatte 104, gespiegelt angeordnet. Dementsprechend ergibt sich mit einer zusätzlichen Einlagefolie 108 (a,b) zwischen der Trennplatte 104 und dem Düsenbacken 102 ein weiterer Düsenschlitz 103 (a,b). Hierdurch ist es zum einen möglich, eine simultane Beschichtung von zwei unterschiedlichen Beschichtungsstoffen qₐ und q_{b} und zum anderen eine Beschichtung mit demselben Beschichtungsstoff q in der doppelten Geschwindigkeit durchzuführen. Zudem kann eine Beschichtung in zwei Lagen vorgenommen werden.

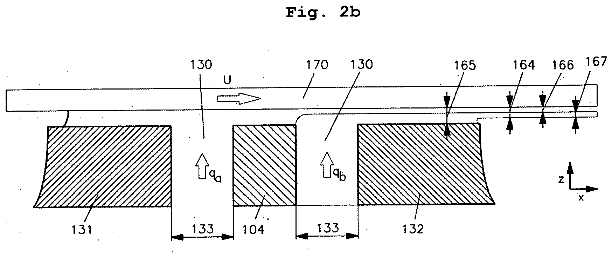

**Fig. 2b****:** Schematische Darstellung der geometrischen Verhältnisse am Austrittspalt einer erfindungsgemäßen Vorrichtung mit Doppelspalt

In Fig. 2b ist eine schematische Darstellung der geometrischen Verhältnisse an den Austrittspalten 130 (a,b) wiedergegeben. Die Düsenschlitze 103 (a,b) enden jeweils quer zur Transportrichtung U des Substrats 170 und parallel zum Substrat 170 als Austrittsspalte 130 (a,b) des Düsenkörpers 200 vgl. Fig. 2a, wobei der jeweilige Austrittsspalt 130 (a,b) über den jeweiligen Düsenschlitz 103 (a,b) in Strömungsverbindung mit dem jeweiligen Zulaufkanal 107 (a,b) vgl. Fig. 2a ist.

Die Breite des jeweiligen Austrittspalts 133 entspricht hier der Dicke der Einlagefolie 108 (a,b) und definiert den Abstand zwischen der stromaufwärts gelegenen Düsenlippe 131 und der stromabwärts gelegenen Düsenlippe 132. Die Dicke der Einlagefolie 108 (a,b) kann hier auch unterschiedlich sein. Dazwischen ist die Trennplatte 104 angeordnet. Somit ergibt sich ein weiterer Austrittspalt 133 der einem unterschiedlichen Beschichtungsstoff beschickt werden kann.

Zwischen dem jeweiligen Austrittsspalt 130 bzw. den beiden Düsenlippen 131, 132 und dem in Bewegung befindlichen Substrat 170 bildet sich während des Beschichtungsprozesses eine Flüssigkeitsbrücke 160 vgl. Fig. 1b aus.

Die Flüssigkeitsbrücke 160 unterscheidet sich hier allerdings von der in Fig. 1b, in derart das die Dicke der Flüssigkeitsbrücke 160 sich aus den beiden Teilströmen qₐ und q_{b} ergibt.

Dementsprechend resultiert die Nassfilmdicke 164 aus der Nassfilmdicke des Beschichtungsstoffs A 166 und der Nassfilmdicke des Beschichtungsstoffs B 167 sich.

### Bezugszeichenliste

- 100: Vorrichtung zum intermittierenden Beschichten
- 101: Düsenbacken
- 102: Düsenbacken
- 103: Düsenschlitz
- 104: Trennplatte
- 105: Düsenbackenausfräsung

- 107: Zulaufkanal
- 108: Einlagefolie

- 120: Verstelleinheit
- 121: elastisch verformbaren Element
- 122: Dichtelement
- 123: Durchbruch
- 126: Abdeckung
- 127: Sensordurchbruch
- 128: Hohlraum
- 129: Zuleitung Hilfsfluid
- 130: Austrittsspalt
- 131: Stromaufwärts gelegene Düsenlippe
- 132: Stromabwärts gelegene Düsenlippe
- 133: Breite Austrittspalt

- 141: Sperrmedium /Ventil
- 142: Sperrmedium /Ventil
- 143: Sperrmedium /Ventil
- 144: Sperrmedium /Ventil

- 150: Scherregulator
- 151: Gehäuse
- 152: Fluidzulauf / Fluidzulaufkanal
- 153: Ringspalt
- 154: Verdrängerkörper
- 155: Aktor
- 160: Flüssigkeitsbrücke
- 161: Nassfilm, Flüssigkeitsfilm auf dem Substrat
- 162: Stoppkante, Filmstoppkante
- 163: Startkante, Filmstartkante
- 164: Nassfilmdicke
- 165: Dicke der Flüssigkeitsbrücke 160
- 166: Nassfilmdicke des Beschichtungsstoffs A
- 167: Nassfilmdicke des Beschichtungsstoffs B
- 170: Substrat
- 180: Sensor, Abstandssensor, Distanzsensor
- U: Bewegungsrichtung des Substrat
- q, qₐ, q_{b}: Fördervolumenstrom
- p: Druck / Umgebungsdruck
- p1: Drucklevel / Druckniveau 1
- p2: Drucklevel / Druckniveau 2
- p3: Drucklevel / Druckniveau 3
- p4: Drucklevel / Druckniveau 4
- ps: Systemdruck / Druck im Düsenspalt 103

## Patentansprüche

1. Vorrichtung zum intermittierenden Beschichten eines relativ zur Vorrichtung in einer Transportrichtung U in Bewegung befindlichen Substrats (170) mit einem Beschichtungsstoff, umfassend einen Düsenkörper (100) mit mindestens zwei gegenüberliegenden Düsenbacken (101,102), und ein Düsenschlitz (103) quer zur Transportrichtung U des Substrats (170) und parallel zum Substrat (170) erstreckend in einem Austrittsspalt (130) endet,
wobei
der Austrittsspalt (130) über den Düsenschlitz (103) in Strömungsverbindung mit einem Zulaufkanal (107) für den Beschichtungsstoff ist und
wenigstens eine Düsenbacke (101,102) mit mindestens einem Durchbruch (123) versehen ist,
wobei
der Durchbruch (123) zwischen dem Zulaufkanal (107) und dem Austrittsspalt (130) in den Düsenschlitz (103) ausmündet und mit einem elastischen verformbaren Element (121) fluiddichtend zum Düsenschlitz (103) hin verschlossen ist,
**dadurch gekennzeichnet, dass** zwischen den Düsenbacken (101,102) eine Einlagefolie (108) mit einer Aussparung vorgesehen ist, wobei die Aussparung in der Einlagefolie (108) den Düsenschlitz (103) für den Beschichtungsstoff innerhalb des Düsenkörpers (100) bildet sowie
der Durchbruch (123) mit einer Abdeckung (126) versehen ist, welche mit dem elastisch verformbaren Element (121) in der wenigstens einen Düsenbacke (101) eine Druckkammer (128) für die Aufnahme eines Hilfsfluides ausbildet und die Druckkammer (128) fluiddichtend gegenüber der Umgebung verschließt, wobei die Druckkammer (128) Mittel zur Erfassung der Verformung des elastisch verformbaren Elements (121) aufweist.

2. Vorrichtung nach Anspruch 1,
**dadurch gekennzeichnet, dass**
die Druckkammer (128) durch eine Zuleitung (129) mit mindestens zwei Druckquellen für das Hilfsfluid fluidisch verbunden ist, wobei zwischen der Zuleitung (129) und jeder Druckquelle mindestens ein Ventil (141,142,143,144) zwischengeschaltet ist, wobei über das mindestens eine Ventil (141,142,143,144) jeweils nur eine der Druckquellen mit der Zuleitung (129) fluidisch verbunden ist.

3. Vorrichtung nach Anspruch 2,
**dadurch gekennzeichnet, dass**
die mindestens zwei Druckquellen für die Erzeugung jeweils eines konstanten Drucks geeignet sind, wobei sich die Drücke der Druckquellen sich jeweils in ihrem Betrag unterscheiden.

4. Vorrichtung nach Anspruch 1 bis 3,
**dadurch gekennzeichnet, dass**
vor dem Zulaufkanal (107) ein Scherregulator (150) zur Manipulation der Scherspannung TF des Beschichtungsstoffs vorgeschaltet ist.

5. Vorrichtung nach Anspruch 4,
**dadurch gekennzeichnet, dass**
der Scherregulator (150) eine vom Beschichtungsstoff durchströmbare Kavität aufweist, in der ein umströmbarer Verdrängungskörper (154) eingesetzt ist und einen Ringspalt (153) um den Verdrängungskörper (154) ausbildet.

6. Vorrichtung nach Anspruch 5,
**dadurch gekennzeichnet, dass**
der Ringspalt (153) eine in Flussrichtung des Beschichtungsstoffs, sich zuspitzenden kegelstumpfförmige Erstreckung aufweist.

7. Vorrichtung nach Anspruch 6,
**dadurch gekennzeichnet, dass**
der Verdrängungskörper mittels eines Aktors axial verschiebbar ist.

8. Vorrichtung nach einem der vorgenannten Ansprüche,
**dadurch gekennzeichnet, dass**
zwischen den Düsenbacken (101,102) eine Trennplatte (104) angeordneten ist und zwischen jeder Düsenbacke (101,102) und der Trennplatte (104) jeweils eine Einlagefolie (108a, 108b) vorgesehen ist, wobei die jeweilige Einlagefolie (108a, 108b) eine Aussparung aufweist welche einen Düsenschlitz (103a, 103b) innerhalb des Düsenkörpers (200) bildet.

9. Vorrichtung nach einem der vorgenannten Ansprüche
**dadurch gekennzeichnet, dass**
die Mittel zur Erfassung der Verformung des elastisch verformbaren Elements (121) als Abstandssensor (180) ausgebildet ist und orthogonal und mittig auf das elastisch verformbare Element (121) gerichtet ist.

## Claims

1. Device for the intermittent coating of a substrate (170) that is in motion relative to the device in a transport direction U with a coating substance, comprising a nozzle body (100) with at least two opposed nozzle jaws (101, 102) and a nozzle slot (103) which extends transversely to the transport direction U of the substrate (170) and parallel to the substrate (170) and ends in an outlet gap (130),
wherein
the outlet gap (130) is in flow connection by means of the nozzle slot (103) with a supply channel (107) for the coating substance, and at least one nozzle jaw (101, 102) is provided with at least one opening (123),
wherein
the opening (123) opens, between the supply channel (107) and the outlet gap (130), into the nozzle slot (103) and is closed in a fluid-tight manner towards the nozzle slot (103) with an elastically deformable element (121),
**characterised in that**
an insertion film (108) with a cut-out opening is provided between the nozzle jaws (101, 102), wherein the cut-out opening in the insertion film (108) forms the nozzle slot (103) for the coating substance inside the nozzle body (100), and
the opening (123) is provided with a cover (126), which, with the elastically deformable element (121), forms in the at least one nozzle jaw (101) a pressure chamber (128) for receiving an auxiliary fluid, and closes the pressure chamber (128) in a fluid-tight manner with respect to the surroundings, wherein the pressure chamber (128) comprises means for detecting the deformation of the elastically deformable element (121).

2. Device according to claim 1,
**characterised in that**
the pressure chamber (128) is connected in a fluid-passable manner by a supply line (129) to at least two pressure sources for the auxiliary fluid, wherein, arranged in the circuit between the supply line (129) and each pressure source, is at least one valve (141, 142, 143, 144), and whereby, as a result of the at least one valve (141, 142, 143, 144), in each case only of the pressure sources is connected in a fluid-passable manner to the supply line (129).

3. Device according to claim 2,
**characterised in that**
the at least two pressure sources are suitable for producing in each case a constant pressure, wherein the pressures of the pressure sources differ in each case in their values.

4. Device according to claim 1 to 3,
**characterised in that**
a shear regulator (150) is arranged upstream of the supply channel (107) for the manipulation of the shear stress TF of the coating substance.

5. Device according to claim 4,
**characterised in that**
the shear regulator (150) comprises a cavity though which the coating substance can flow, inserted in which is a displacement body (154) around which a flow can pass, and forms a ring gap (153) around the displacement body (154).

6. Device according to claim 5,
**characterised in that**
the ring gap (153) exhibits an extension in the flow direction of the coating substance, which tapers in the form of a truncated cone.

7. Device according to claim 6,
**characterised in that**
the displacement body can be displaced axially by means of an actuator element.

8. Device according to any one of the preceding claims
**characterised in that**
a separation plate (104) is arranged between the nozzle jaws (101, 102), and an insertion film (108a, 108b) is provided in each case between each nozzle jaw (101, 102) and the separation plate (104), wherein the respective insertion film (108a, 108b) exhibits a cut-out opening, which forms a nozzle slot (103a, 103b) inside the nozzle body (200).

9. Device according to any one of the preceding claims
**characterised in that**
the means for detecting the deformation of the elastically deformable element (121) is configured as a distance interval sensor (180) and is aligned orthogonally and in the middle onto the elastically deformable element (121).

## Revendications

1. Dispositif permettant de recouvrir par intermittence un substrat (170) se déplaçant par rapport au dispositif dans une direction de transport (U), avec un matériau de revêtement, comprenant :
un corps de buses (100) équipé d'au moins deux mâchoires de buses (101, 102) opposées l'une à l'autre,
une fente de buses (103) se terminant par une fente de sortie (130) s'étendant transversalement à la direction de transport (U) du substrat (170) et parallèlement à ce substrat (170),
la fente de sortie (130) étant en liaison fluidique par l'intermédiaire de la fente de buses (103) avec un canal d'alimentation (107) du matériau de revêtement, et
au moins une mâchoire de buses (101, 102) étant équipée d'au moins une ouverture (123),
l'ouverture (123) débouchant dans la fente de buses (103) entre le canal d'alimentation (107) et la fente de sortie (130), et étant fermée de façon étanche aux fluides vers la fente de buses (103) par un élément élastiquement déformable (121),
**caractérisé en ce que**
il est prévu entre les mâchoires de buses (101, 102) un film d'insertion (108) ayant un évidement, cet évidement du film d'insertion (108) formant, à la partie interne du corps de buses (100), la fente de buses (103) pour le matériau de revêtement, et l'ouverture (123) comportant une couverture (126) qui forme, avec l'élément élastiquement déformable (121), dans la mâchoire de buses (101) une chambre de pression (128) pour la réception d'un fluide auxiliaire, et ferme la chambre de pression (128) de façon étanche aux fluides vis-à-vis de l'environnement, la chambre de pression (128) comprenant des moyens permettant de détecter la déformation de l'élément élastiquement déformable (121).

2. Dispositif conforme à la revendication 1,
**caractérisé en ce que**
la chambre de pression (128) est reliée fluidiquement par une conduite d'alimentation (129) à au moins deux sources de pression pour le fluide auxiliaire, et, entre la conduite d'alimentation (129) et chaque source de pression est intercalée au moins une soupape (141, 142, 143, 144), une seule des sources de pression étant respectivement reliée fluidiquement à la conduite d'alimentation (129) par l'intermédiaire de la soupape (141, 142, 143, 144).

3. Dispositif conforme à la revendication 2,
**caractérisé en ce que**
les deux sources de pression sont respectivement adaptées pour l'obtention d'une pression constante, et les valeurs respectives de la pression des sources de pression sont différentes.

4. Dispositif conforme à l'une des revendications 1 à 3,
**caractérisé en ce qu'**
en amont du canal d'alimentation (107) est branché un régulateur de cisaillement (150) permettant de manipuler la tension de cisaillement TF du matériau de revêtement.

5. Dispositif conforme à la revendication 4,
**caractérisé en ce que**
le régulateur de cisaillement (150) comporte une cavité pouvant être traversée par le matériau de revêtement et dans laquelle un corps de déplacement (154) pouvant être entouré par ce matériau est inséré et forme une fente annulaire (153) autour de celui-ci.

6. Dispositif conforme à la revendication 5,
**caractérisé en ce que**
la fente annulaire (153) s'étend selon la forme d'un tronc de cône dont la pointe est orientée dans la direction de circulation du matériau de revêtement. -

7. Dispositif conforme à la revendication 6,
**caractérisé en ce que**
le corps de déplacement peut être déplacé en translation axiale au moyen d'un actiorineur.

8. Dispositif conforme à l'une des revendications précédentes,
**caractérisé en ce que**
entre les mâchoires de buses (101, 102) est montée une plaque de séparation (104), et, entre chaque mâchoire de buses (101, 102) et la plaque de séparation (104) il est respectivement prévu un film d'insertion (108a, 108b), chacun des films d'insertion (108a, 108b) comportant un évidement qui forme une fente de buses (103a, 103b) à la partie interne du corps de buses (200).

9. Dispositif conforme à l'une des revendications précédentes,
**caractérisé en ce que**
les moyens permettant de détecter la déformation de l'élément élastiquement déformable (121) sont réalisés sous la forme d'un capteur de distance (180) et sont dirigés perpendiculairement et dans une position centrale sur l'élément élastiquement déformable (121).
